# EUROPEAN PATENT APPLICATION

(11) **EP 4 826 162 A1**
(43) Date of publication of application: **21.10.2026**
(21) Application number: 25170698.2
(22) Date of filing: 15.04.2025
(51) Int. Cl.: E02B 17/02, B63B 21/50, E02B 17/00

(54) **LIGHTWEIGHT OFFSHORE PLATFORM WITH VERTICAL COLUMN ASSEMBLY**

(71) Applicant: Oil States Industries, Inc., Arlington, Texas 76001 (US)
(72) Inventor: Masson, Peter Craig, Katy, TX 77493 (US); Stephen, Garry Robert, Montrose, Angus DD10 9AW (GB); Aldus, Ryan, Aberdeen AB22 9RZ (GB); McNeill, Kirsten, Cove, Aberdeen AB12 3QQ (GB); Hossain, Adnan, Aberdeen AB10 6HY (GB); Shanks, John, Banchory AB31 5HS (GB); McPherson, Keith, Milltimber, Aberdeen AB13 0JY (GB)
(74) Representative: Forresters IP LLP

(57) **Abstract**

An apparatus and methods for installation of an offshore platform for supporting equipment installations is provided. The apparatus includes a platform configured to support offshore equipment, and supported by a supporting structure such as a modular column assembly fixedly connected to the platform, and also connected to a foundation disposed on the seafloor. The modular column assembly or other supporting structure carries the full load of the platform and the equipment mounted thereon, as no other component extends between the platform and the foundation.

## Description

### TECHNICAL FIELD

The present disclosure relates generally to offshore structures, and more particularly, to structures for supporting offshore wind turbines, oil and gas operations, desalination operations, substations, or similar equipment.

Within the embodiments described, there are multiple types of arrangements that provide a stable platform for mounting offshore equipment. While many types of equipment can be supported by the structure disclosed or installed using the steps disclosed herein, reference will be made to one such example -- an offshore wind turbine installation. A person of ordinary skill would understand that other equipment can be affixed on the structure disclosed herein and should not be read out of the disclosure because one such example is given.

### BACKGROUND OF THE INVENTION

For an offshore installation, generally, the arrangement of piles, underwater structures, and/or the platform type varies based on the depth of the installation. In the case of offshore wind developments, shallow depth installations, or those of less than about 50 meters are typically fixed to the seafloor by a rigid structure anchored by piles. Examples of structures that can be used in shallow waters may include, for example, monopiles, jacket structures, jack-up installations, and the like. However, the use of piles can be disadvantageous due to the noise pollution created during the installation of driven piles. As water depth increases beyond approximately 50 meters, the cost of fixed structures rapidly increases because of the additional material costs for the structure to sustain increased wave and current loads, and because the installation vessels required to perform the installation are significantly more expensive. Thus, currently floating platforms are used, or planned to be used, in deeper water.

In deeper water, typically greater than 50 meters water depth for wind developments, floating platforms can alternatively be used. These include, for example, barge, spar buoy, tension-leg platforms, semi-submersible platforms, and the like. The transition depth from fixed structures to floating platforms depends on the wind, wave and current at the site, the seafloor conditions, and economic considerations.

Floating platforms are subject to wave and current loading resulting in challenges that require additional costs to achieve the required stability for supporting equipment, such as a wind turbine, or require modifications to the equipment, or result in reduced operability or up-time for the equipment or additional maintenance and repair. Consequently, as water depth increases beyond 50 meters, or so, the cost of the installation increases significantly regardless of the use of traditional fixed structure or floating platform.

The economics of the offshore wind market requires that the cost of the structures or platforms be minimized. Water depths in the range of 50-150 meters represent a large market opportunity because of the shortcomings of both traditional fixed and floating platform installations and because in many locations ideal wind farm sites, i.e., that are easily accessible, located near available infrastructure, and out of public sight, are within this water depth range. Such transition water depth sites are available for installations in many offshore wind fields around the world, including in the North Sea, Baltic Sea, Celtic Sea, Irish Sea, Mediterranean, Eastern U.S. Seaboard, Gulf of Mexico, Yellow Sea, Taiwan Strait, South China Sea, and Bass Strait, among others. Because traditional fixed structures and floating platforms are not as economical in water depths in the range of 50-150 meters, and floating platforms do not perform as well in shallower waters, an improved solution is required. The current invention seeks to improve upon the use of and options available for installing structures, including for example, wind turbines, in these transition sites around the world.

The applicant previously filed a number of patent applications directed to an offshore platform with a vertical column assembly that was intended to address certain issues described above. Those applications include US Patent Application Nos. 18/183,442; 18/301,834; 18/489,448; and 18/930,410. Each of those applications, however, was limited to a design that included, *inter alia,* a plurality of tendons connecting the top platform to the foundation. The applicant has since discovered that this design feature is not only unnecessary but also counterproductive. Accordingly, the invention described below in further detail is intended to address certain issues created by the applicant's own prior inventions, as well as those discussed above concerning traditional fixed and floating offshore platforms.

### SUMMARY OF THE INVENTION

One or more embodiments of the invention may comprise an offshore installation comprising a top platform having a weight and comprising a top surface and a bottom surface, a foundation configured to be disposed on a seafloor, a vertical column assembly comprising a first end fixedly connected to the bottom surface of the top platform and a second end connected to the foundation, a first vertical support member extending from the first end to the second end, such that the vertical column assembly supports the weight of the top platform, and a plurality of lateral supports configured to extend from the top platform to the seafloor.

One or more embodiments of the invention may comprise an offshore installation comprising: a top platform having a weight and comprising a top surface and a bottom surface; a foundation configured to be disposed on a seafloor; a vertical column assembly comprising: a first end configured to be fixedly connected to the bottom surface of the top platform; a second end configured to be connected to the foundation; a first vertical support member configured to extend from the first end to the second end, such that the vertical column assembly supports the weight of the top platform; and a plurality of lateral supports configured to extend from the top platform to the seafloor.

In some embodiments, the vertical column assembly may further comprise a second vertical support member extending from the first end of the vertical column assembly to the second end of the vertical column assembly.

In some embodiments, the top platform may further comprise a center point, a first leg extending outward from the center point, a second leg extending outward from the center point, a third leg extending outward from the center point, wherein the first leg, second leg, and third leg are all on a first plane.

In some embodiments, the vertical column assembly may comprise a column truss.

In some embodiments, the offshore installation may further comprise a wind turbine configured to be mounted on the top surface of the top platform.

In some embodiments, the plurality of lateral supports may comprise tendons.

In some embodiments, the second end of the vertical column assembly may be fixedly connected to the foundation.

In some embodiments, the offshore installation may further comprise a pivot joint connecting the second end of the vertical column assembly to the foundation.

In some embodiments, the offshore installation may further comprise a plurality of anchors disposed in the seafloor and a plurality of connector bodies, each connector body configured to connect one of the plurality of lateral supports to one of the plurality of anchors.

In some embodiments, each of the plurality of connector bodies may be configured to allow relative axial movement of the lateral support to which it is connected.

One or more embodiments of the invention may comprise a method for installing an offshore installation on a seafloor, comprising installing on the seafloor at an installation site a foundation, a vertical column assembly connected to the foundation, a plurality of lateral supports and a plurality of anchors disposed in the seafloor and connected to the plurality of lateral supports, transporting to the installation site offshore equipment and a top frame structure having a weight and comprising a top surface and a bottom surface, positioning the top frame structure above the vertical column assembly, such that the vertical column assembly supports the weight of the top frame structure, fixedly connecting a top end of the vertical column assembly to the bottom surface of the top frame structure, attaching the plurality of lateral supports to the top frame structure, applying tension to the lateral supports, and installing the offshore equipment on the top surface of the top frame structure.

One or more embodiments of the invention may comprise a method for installing an offshore installation on a seafloor, comprising: installing on the seafloor at an installation site a foundation, a vertical column assembly connected to the foundation, a plurality of lateral supports, and a plurality of anchors disposed in the seafloor and connected to the plurality of lateral supports; transporting to the installation site offshore equipment and a top frame structure having a weight and comprising a top surface and a bottom surface; positioning the top frame structure above the vertical column assembly, such that the vertical column assembly supports the weight of the top frame structure; fixedly connecting a top end of the vertical column assembly to the bottom surface of the top frame structure; attaching the plurality of lateral supports to the top frame structure, wherein the plurality of lateral supports extend to the seafloor; applying tension to the lateral supports; and installing the offshore equipment on the top surface of the top frame structure.

In some embodiments, the method may further comprise lifting the top frame structure clear of an installation vessel before it is positioned above the vertical column assembly.

In some embodiments, the step of installing the offshore equipment on the top surface of the top frame structure may be performed prior to the step of transporting to the installation site offshore equipment and a top frame structure having a weight and comprising a top surface and a bottom surface.

In some embodiments, the step of installing the offshore equipment on the top surface of the top frame structure may be performed after the step of applying tension to the lateral supports.

In some embodiments, the method may further comprise the step of installing a plurality of connector bodies, each connector body configured to connect one of the plurality of lateral supports to one of a plurality of anchors disposed on the seafloor.

Another embodiment may comprise an offshore installation installed using a kit as disclosed herein.

### BRIEF DESCRIPTION OF DRAWINGS

The accompanying drawings, which are included to provide further understanding and are incorporated in and constitute a part of this specification, illustrate (by way of example) disclosed embodiments and together with the description serve to explain the principles of the disclosed embodiments. In the drawings:
FIG. 1 depicts a schematic view of an offshore wind turbine installation, in accordance with embodiments of the present disclosure.
FIG. 2 depicts an offshore wind turbine installation seen from above, in accordance with embodiments of the present disclosure.
FIG. 3 depicts a schematic drawing of a wind platform with a column spring assembly, in accordance with embodiments of the present disclosure.
FIG. 4 depicts a compression guide member isometric, in accordance with the embodiments of the present disclosure.
FIG. 5A depicts a schematic drawing of a wind platform with a lattice tower assembly, in accordance with the embodiments of the present disclosure.
FIG. 5B depicts an alternate embodiment of the configuration shown in FIG. 5A, with a plurality of lateral supports attached to the top frame structure at different locations.
FIG. 6 depicts a schematic drawing of a wind platform with a modular column assembly, in accordance with the embodiments of the present disclosure.
FIG. 7 depicts an embodiment of an offshore top frame structure, in accordance with embodiments of the present disclosure.
FIG. 8A depicts a schematic drawing of a wind platform with a spud can foundation, in accordance with the embodiments of the present disclosure.
FIG. 8B depicts an alternate embodiment of the configuration shown in FIG. 8A, with a plurality of lateral supports attached to the top frame structure at different locations.
FIG. 9 depicts a schematic drawing of a wind platform with micro-piles, in accordance with the embodiments of the present disclosure.
FIG. 10 depicts an illustrative installation procedure for a wind turbine platform, in accordance with embodiments of the present disclosure.

### DETAILED DESCRIPTION OF THE INVENTION

The present disclosure relates generally to offshore structures, and more particularly, to structures for supporting offshore wind turbines and other equipment. As described herein, embodiments of the offshore structure described herein improve upon the traditional offshore structure configurations, especially in transition sites between 50-150 meters water depth.

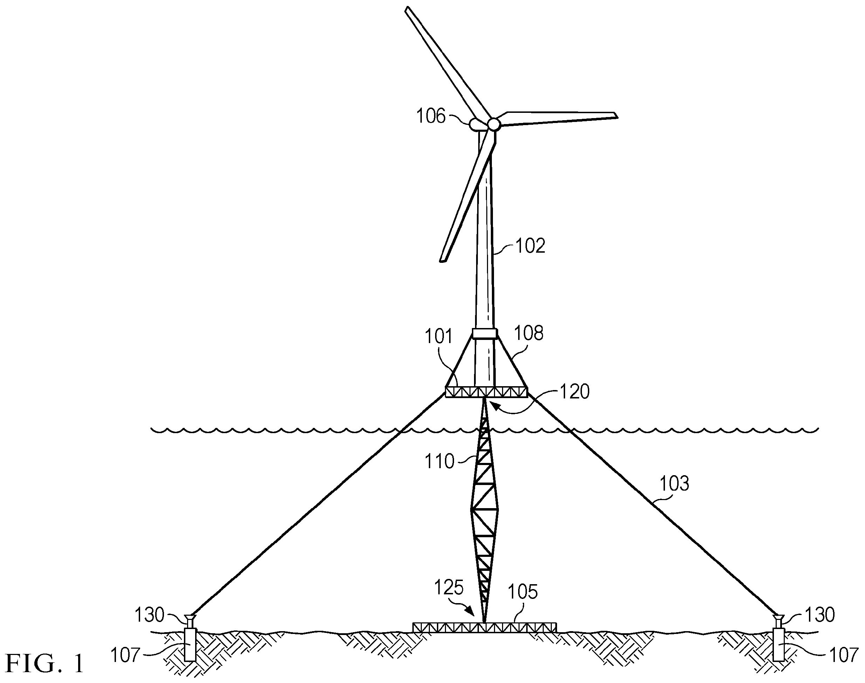

FIG. 1 provides a schematic view of an example configuration of an offshore installation to support offshore operations, in this example, a wind turbine 106, in accordance with the embodiments of the present disclosure. In the illustrated embodiment, a top frame structure 101 supports a wind turbine tower 102 and wind turbine 106. In the illustrated embodiments, stays 108 provide additional support to the wind turbine tower 102. In the illustrated embodiment, the top frame structure 101 is supported by a column assembly 110. The column assembly 110 extends to the foundation 105 located on the seafloor.

As illustrated in FIG. 1, the column assembly 110 may be a space-frame, but persons of skill in the art would understand that other structures could be used. For example, in some embodiments, for example in shallow areas, it may be beneficial to use a large diameter single pipe for the column assembly 110. In other embodiments, as many as four or five pipes could be used. It would be understood by one of skill in the art that the diameter of the pipes could range from 36 inches to 60 inches, or more, in some embodiments. Other embodiments of the column assembly may also be used, as discussed below in further detail.

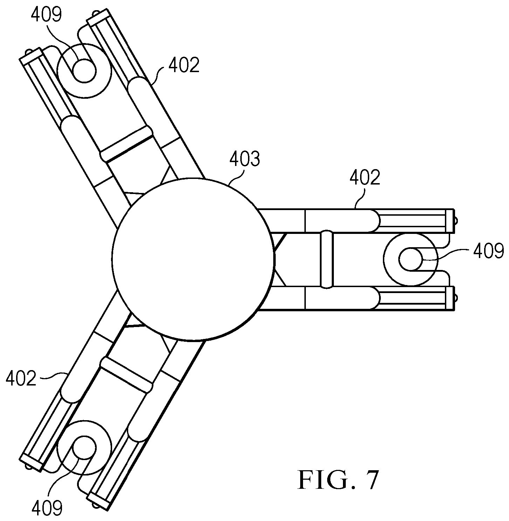

Unlike the inventions described in US Patent Application Nos. 18/183,442; 18/301,834; 18/489,448; and 18/930,410, the present invention does not include tendons connecting the top frame structure 101 to the foundation 105. The elimination of these tendons makes the manufacture of the present invention much more economical than the design described in the aforementioned applications. In addition, the footprint of top frame structure 101 may be much smaller, as compared to that required by the applicant's prior applications. In particular, protruding sections 402, as shown in FIG. 7 of US Patent Application No. 18/930,410, may be made much shorter, as shown in FIG. 7 of the present application. In one embodiment, the length of protruding sections 402 may be approximately 8 meters, as opposed to 25 meters for the design shown in FIG. 7 of US Patent Application No. 18/930,410. This combination of fewer tendons and a smaller top frame structure results in substantial cost savings - possibly millions of dollars - as compared to the design described and claimed in the applicant's prior applications.

In conjunction with the removal of tendons connecting the top frame structure 101 to the foundation 105, the present invention comprises a fixed connection 120 between column assembly 110 and top frame structure 101, and another connection 125 between column assembly 110 and foundation 105. In one embodiment, connection 125 may be fixed. In another embodiment, connection 125 may be a flexible connection such a pivot joint, which would result in a reduction of the bending moment transferred from the column assembly to the foundation.

Due to the combination of the two features discussed in the preceding paragraphs - the removal of the tendons connecting the top platform 101 to the foundation 105, and the use of a fixed connection 120 at the upper end of the column assembly 110 - column assembly 110 supports the entire load from the top frame structure 101, the wind turbine tower 102 and wind turbine 106. In addition to the weight of these components, the bending moment associated with the wind turbine tower 102 and wind turbine 106 is borne by the column assembly 110, rather than the tendons. The applicant has discovered that this configuration results in decreased fatigue experienced by the lateral supports for the wind platform, discussed below in further detail.

A power umbilical may be installed through a tubular within the column assembly 110, entering the column assembly 110 at a point near the top structure end and exiting at a point near the foundation end. This is advantageous because the umbilical is shielded from wave and current loading and thus dynamic loads and associated fatigue damage is reduced. Alternatively, the power umbilical may be clamped to the outside of the column assembly 110.

The top frame structure 101 may be further supported by lateral supports 103. Lateral supports 103 preferably comprise steel tendons. One of ordinary skill in the art will understand that other lateral supports, such as taut mooring lines, could also be used. In the illustrated embodiment, the top frame structure 101 is supported by at least three lateral supports 103. In certain embodiments, three pairs of lateral supports 103 may be used to increase yaw stiffness. In this case, each pair of lateral supports 103 would be oriented with an angular separation, for example, 120 degrees. The lateral supports 103 resist the shear forces acting on the offshore structure by wind, waves, and ocean currents. In the illustrated embodiment, anchors 107 are used to anchor the lateral supports 103 to the seabed.

In an embodiment in which lateral supports 103 comprise steel tendons, connector body 130 may be used to connect lateral supports 103 to anchors 107. Connector body 130 may slidingly engage lateral support 103, such that, after initial installation, lateral support 103 remains free to move axially downward in relation to connector body 130. One example of such a connector body is the Roto-latch^{™} connector, manufactured and sold by Oil States Industries UK Ltd., of Aberdeen, Scotland. A connector body 130 allowing axial downward movement may be advantageous in the event that one of the lateral supports 103 fails, which could lead to other lateral supports 103 being placed into compression, rather than tension. If the other lateral supports 103 were connected to anchors 107 using a fixed connection, the steel tendons comprising lateral supports 103 could buckle and fail.

As noted above, the column assembly 110 of the present invention supports the entire load from the top frame structure 101, the wind turbine tower 102 and wind turbine 106. Because no portion of the load is carried by lateral supports 103, fatigue on these components should be reduced, thus allowing for smaller tendons than were required by the inventions described in US Patent Application Nos. 18/183,442; 18/301,834; 18/489,448; and 18/930,410. This decrease in the diameter of lateral supports 103 should create further cost savings, in addition to those described above.

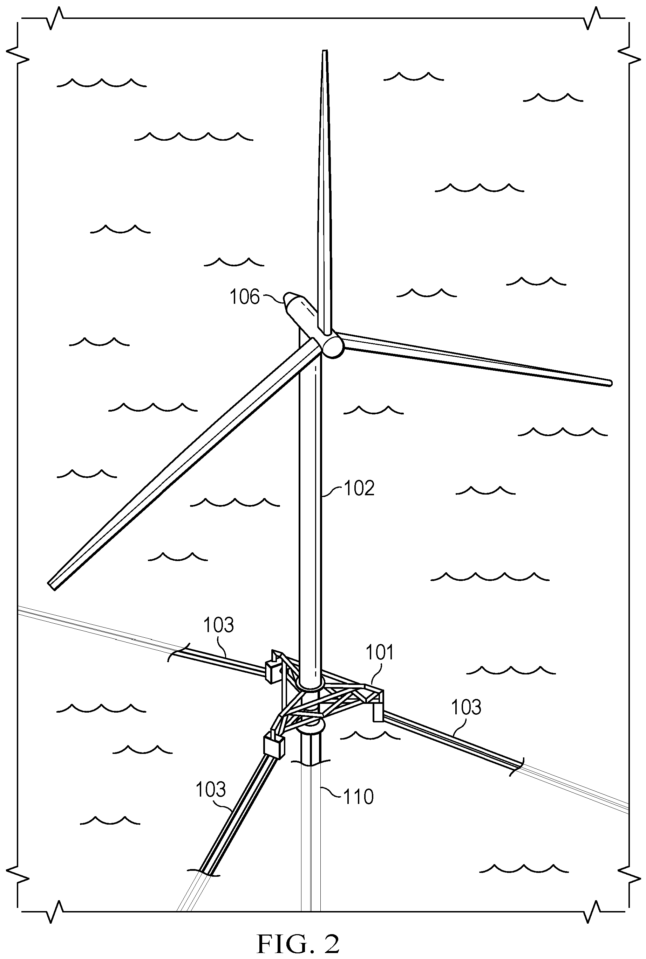

FIG. 2 depicts the upper portion of an offshore installation supporting a wind turbine 106, in accordance with embodiments of the present disclosure. In the illustrated embodiment, the offshore structure is not a floating hull because the vertical support is provided by the column assembly 110 from below the water. The column assembly 110 provides compressive force against the top frame structure 101 in response to the weight of the turbine 106, tower 102, and top frame structure 101, and tension forces applied to lateral supports 103, such that the structure is held rigid in its installation location to counteract the impacts of wind, waves, and currents against the offshore structure reducing accelerations and thus mechanical and inertial loads on the turbine tower and turbine in wind turbine applications.

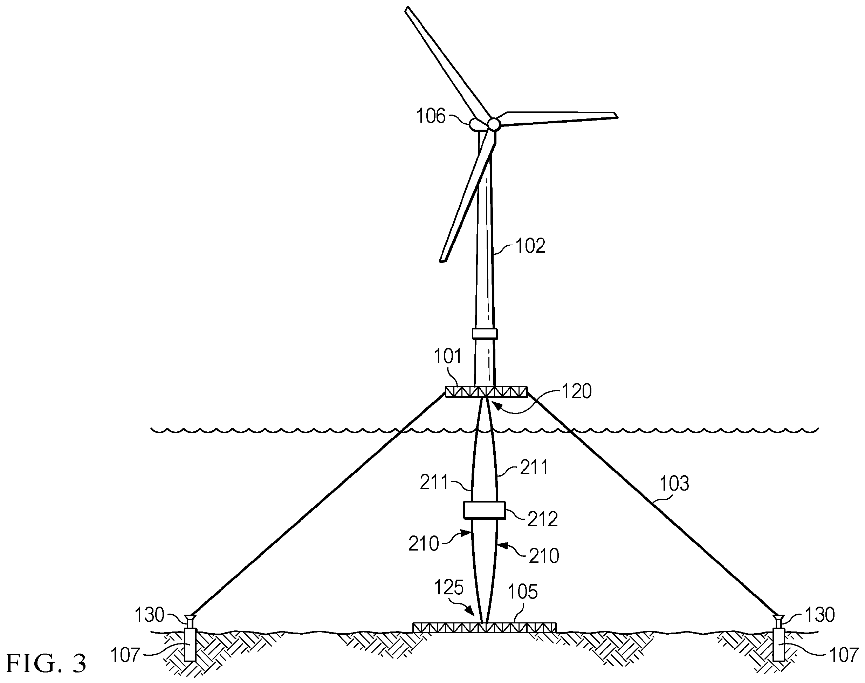

As illustrated in FIG. 3, in some embodiments a column spring assembly 210 may be connected to top frame structure 101 and foundation 105. The column spring assembly 210 is designed to resist global buckling. In certain embodiments, a varying compound section along its length may be used. In the illustrated embodiment, the column spring assembly 210 includes compression members 211 that extend from top frame structure 101 to the foundation 105.

In the illustrated embodiment, the column spring assembly 210 includes at least three compression members 211. The plurality of compression members 211 are supported by a buckle stop or compression member guide 212 which is discussed in further detail below.

In certain embodiments of the column spring assembly 210, the compression members 211 are connected to end plates on the column spring assembly 210 by pins orthogonal to the plane of bending dictated by the slots in the buckle stop or compression member guide 212, but may be connected in any number of ways that would be apparent to one of skill in the art.

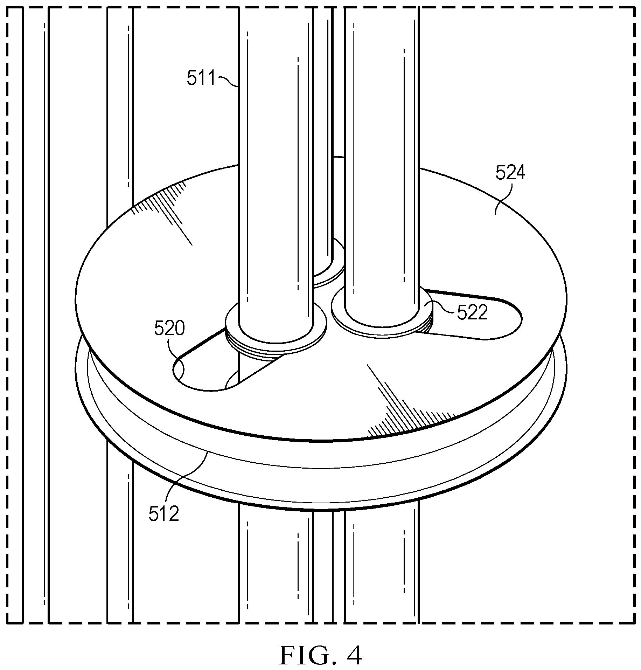

FIG. 4 depicts an isometric view of a buckle stop 512, in accordance with the embodiments of the present disclosure. The buckle stop 512 allows each compression member 511 to deflect outward from the center of the assembly towards the external portion of a guide body 524, thereby increasing the compound section second moment of area, but limiting the deflection and ultimately restraining the compression members 511 laterally against each other to prevent global buckling of the individual compression members 511 and therefore of the composite column spring assembly 210.

In the illustrated embodiment, there are three compression members 511. Each compression member 511 passes through buckle stop 512. The buckle stop 512 includes a guide slot 520 for each compression member 511.In the illustrated embodiment, a guide retainer 522 is installed on each compression member 511. The guide retainer 522 may be installed on the compression member 511 after it is positioned in the buckle stop 512 so that a guide retainer 522 may be positioned on each side of the guide slot 520 to hold the buckle stop 512 in its intended position.

A person of ordinary skill in the art would understand that any mechanical connection, including but not limited to buckle stop 512, could be positioned at any point between the top frame structure 101 and the foundation 105. A person of ordinary skill in the art would understand that when the mechanical connection is a compression member guide it is advantageous to position the compression member guide equidistant between the top frame structure 101 and the foundation 105 to optimize buckling capacity. A person of ordinary skill in the art would also understand that in some instances it is advantageous to include multiple mechanical connections positioned between the top frame structure 101 and the foundation 105. In some embodiments, the mechanical connection is formed with standard structural grade steel such as API 2H Grade 50.

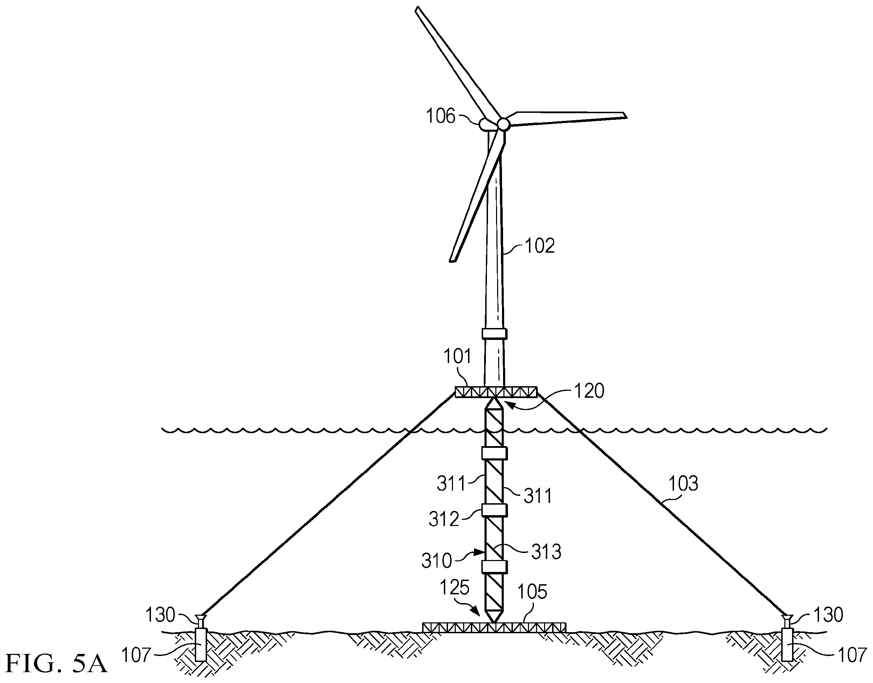

As illustrated in FIG. 5A, in some embodiments the column assembly is a lattice tower column assembly 310. In this embodiment, straight pipes are used rather than pipes that are intended to deflect outward, as in the embodiment of the column spring assembly 210 discussed above. As in the column spring assembly 210 discussed above, the lattice tower column assembly 310 includes pipes 311 that extend from the top frame structure 101 to the foundation 105. The lattice tower column assembly 310 may include cross-bracing 313. The cross-bracing 313 may be fitted to the column assembly using friction clamps. In other embodiments, the diagonal cross-bracing 313 is welded to the column assembly. The cross-bracing 313 distributes shear forces within the column assembly. Cross-bracing between pipes 311 may be in any configuration, including but not limited to, horizontal, vertical, or diagonal. One of ordinary skill in the art will understand that the particular configuration of any cross-bracing will depend on the conditions at the installation site, the equipment installed on top frame structure 101, and potentially other variables specific to a particular location.

It would be understood by one of skill in the art that the column assembly 110 connected to the top frame structure 101 and foundation 105 could be any arrangement that provides sufficient strength and stability to support the weight of the system and the downward force of lateral supports 103, providing stability to the top frame structure 101. In particular, it would also be understood by one of skill in the art that, because the present invention results in the entire load from the system being carried by the column assembly 110, that component will need to have increased strength, as compared to the column assembly 110 required by US Patent Application Nos. 18/183,442; 18/301,834; 18/489,448; and 18/930,410. In one embodiment, the column assembly 110 of the present invention may comprise four steel pipes, each with a diameter of approximately 42 inches. In addition, the individual elements of column assembly 110 may need to have a slightly greater separation, due to the elimination of the tendons connecting the top frame structure 101 to foundation 105. In one embodiment, the pipes comprising the column assembly 110 may need to be approximately one meter farther apart, as compared to the column assembly 110 described in US Patent Application Nos. 18/183,442; 18/301,834; 18/489,448; and 18/930,410.

In some embodiments, the space-frame, column spring assembly, lattice tower column assembly, pipes, or other structure connected to the top frame structure 101 and foundation 105 may be modular. As illustrated in FIG. 5A, for the lattice tower column assembly 310, plates 312 may be included to support connection between modules and provide additional strength, which is discussed in further detail below. Alternatively, the modules of a modular column assembly may be joined together using any suitable pipe connector.

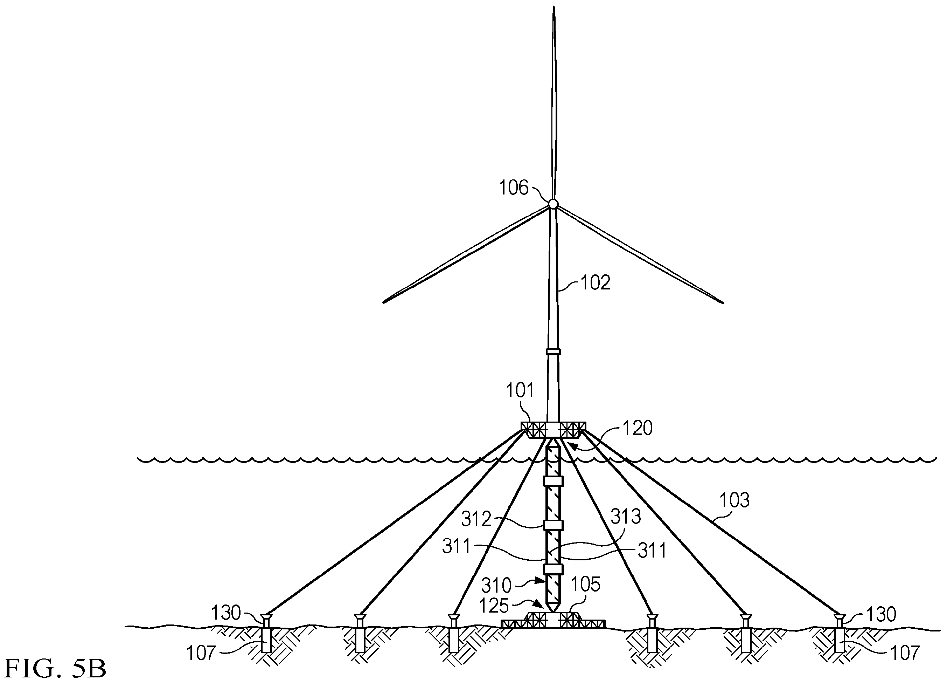

As illustrated in FIG. 5B, an exemplary offshore installation may include lateral supports attached to the top frame structure at a plurality of different points. For example, towards an outer edge of top frame structure 101, multiple lateral supports 103 may be attached, with each such support being anchored to the sea floor at a different location in terms of the lateral distance from foundation 105. In addition, other lateral supports 103 may be attached at a location towards the center of top frame structure 101, i.e., closer to the point at which the lattice tower column assembly 310 is attached to top frame structure 101. One of ordinary skill in the art will appreciate that, for any of the embodiments disclosed herein, any number of lateral supports may be used and attached at any location, as dictated by the particular conditions at the installation site.

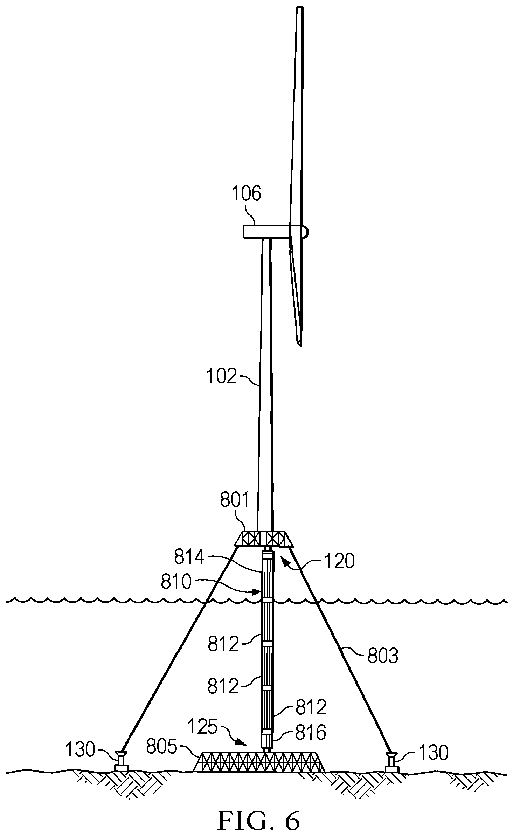

As shown in FIG. 6, the modular column assembly 810 may be formed by a plurality of pre-fabricated joint bundles 812, 814, 816 with mechanical connections attached at each end of the joints such that they are easily transported to a location convenient for final assembly of the joints before installation to form the assembly, or made up during deployment offshore as discussed in further detail below. In certain embodiments, the top and bottom ends of the modular column assembly 810 are connected to the top frame structure 801 and foundation 805 via the top main barrel pup joint 814 and the bottom main barrel pup joint 816, respectively, via fixed connection 120 and connection 125.

In modular embodiments of the column assembly, where one or more mechanical connections are positioned between the top frame structure 101 and the foundation 105, plates 312 as illustrated in FIG. 5A may be used to rigidize the mechanical connections and cause the individual pipes to be constrained to each other. In these embodiments, the compression members or pipes extend through the plates. As will be appreciated by one of ordinary skill in the art, there may be multiple plates at different axial locations along pipes 311, or only a single plate. In certain embodiments, cross bracing 313 (FIG. 5A) may also be used to transfer shear loads between the individual pipes to cause them to act compositely.

The tower 102 and wind turbine 106 are supported by a top frame structure 101. In some embodiments, the top frame structure is a tetrahedral structure with members extending from the tower. As shown in the exemplary embodiment of FIG. 7, the top frame structure 101 has a center point 403 with a plurality of protruding sections 402 that extend out from the center point 403. In certain embodiments, each protruding section 402 of the top frame structure 101 has a truss arrangement. The protruding sections 402 extend out from the center point of the top frame structure 101 to an attachment porch 409. As noted above, attachment porch 409 is not connected to tendons extending from top frame structure 101 to foundation 105, which allows protruding sections 402 to be made significantly shorter. Attachment porch 409 is, however, still connected to lateral supports 103, 803, as shown in various other figures.

In other embodiments, the top frame structure 101 is a dual plate structure with webbing between the dual plates to provide the required strength and stiffness.

The foundation 105 supports the offshore structure at the base of the column assembly 110 or other similar structure. It would be understood that the foundation 105 could be any number of structures. In certain embodiments, the foundation 105 may be stabilized on the seafloor by use of weight baskets on each of the protrusions. Separately or in addition, in certain embodiments, mud mats are included to limit penetration of foundation 105 into the seafloor.

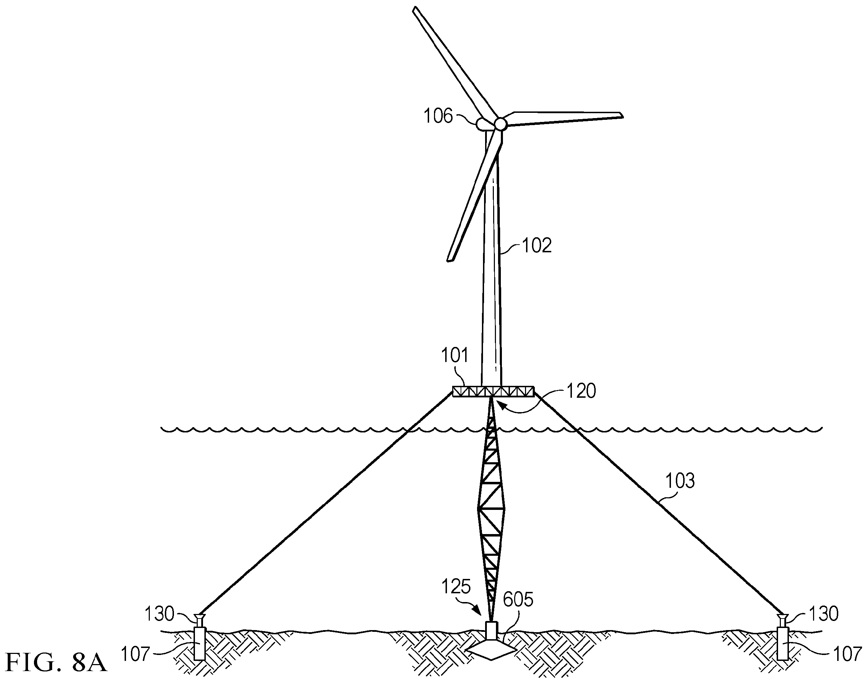

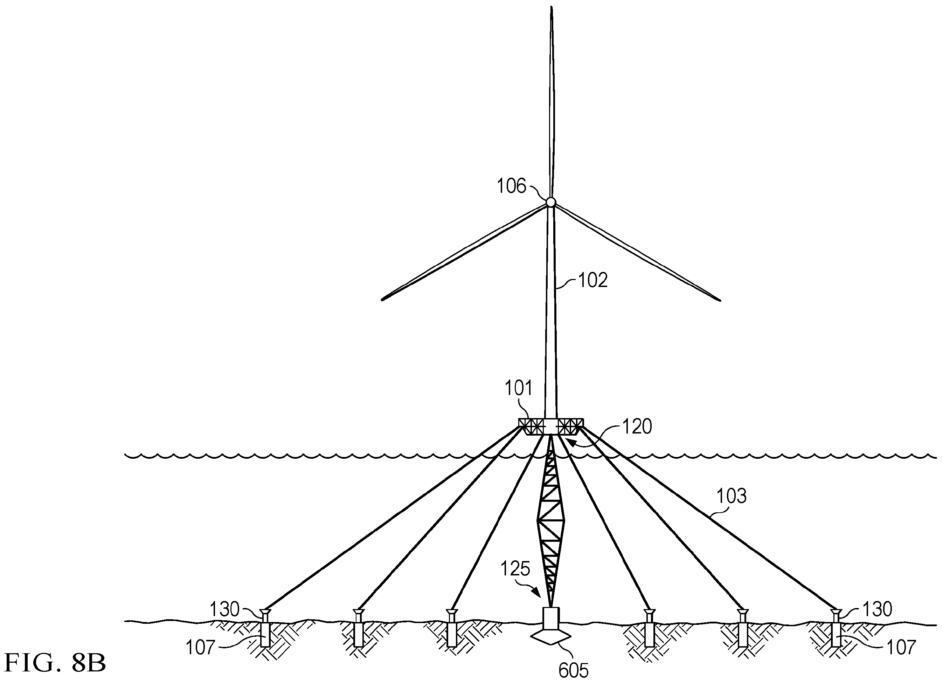

As illustrated in FIG. 8A, the foundation may also be a central spud can 605. The central spud can 605 may provide the axial capacity required to support the equipment weight. As illustrated in FIG. 8B, similar to FIG. 5B, this embodiment, like all other disclosed embodiments, may include lateral supports 103 such as tendons attached to the top frame structure 101 at a plurality of different points. For example, towards an outer edge of top frame structure 101, multiple lateral supports 103 may be attached, with each such support being anchored to the sea floor at a different location in terms of the lateral distance from central spud can 605. In addition, other lateral supports 103 may be attached at a location towards the center of top frame structure 101, i.e., closer to the point at which the column assembly is attached to top frame structure 101. As noted above, one of ordinary skill in the art will appreciate that, for any of the embodiments disclosed herein, any number of lateral supports may be used and attached at any location, as dictated by the particular conditions at the installation site.

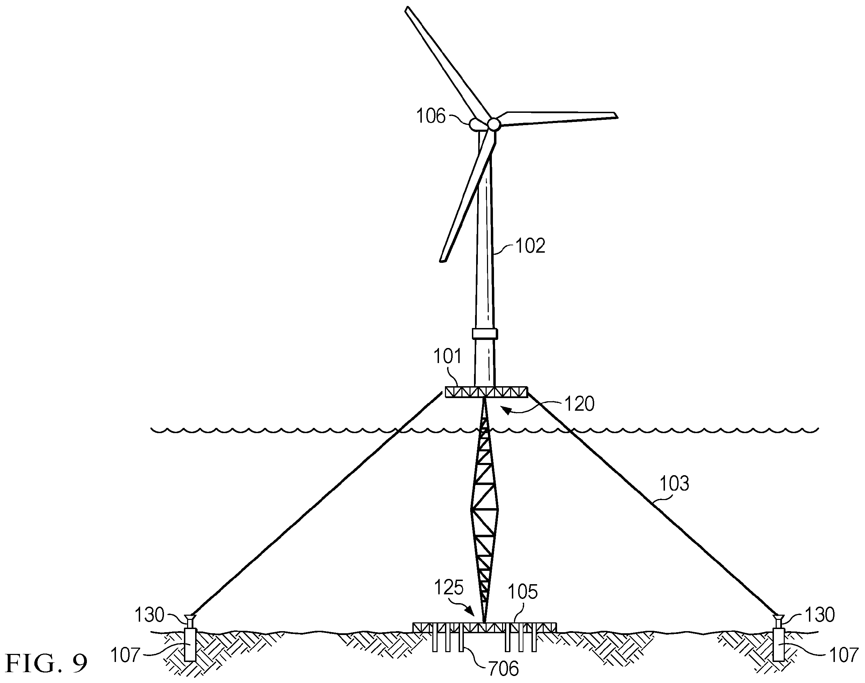

As illustrated in FIG. 9, in certain embodiments, the foundation 105 is anchored to the seafloor by piles located through pile guides as an alternative to weighted baskets. In certain embodiments, a single pile (either a suction pile or driven pile) or a small number of large piles may be used, whereas in other embodiments more numerous micro-piles 706 may be used to anchor and to optimize the design of the foundation 105. The micro-piles may be located on each leg of the foundation so that the load is transferred to the seabed. One of ordinary skill in the art will understand that the particular foundation configuration will vary depending on the location, as dictated by the particular conditions at the installation site. For example, a central spud can as shown in FIG. 8A might be appropriate at one location, while micro-piles as shown in FIG. 9 might be more appropriate at another location due to differing conditions of the seafloor.

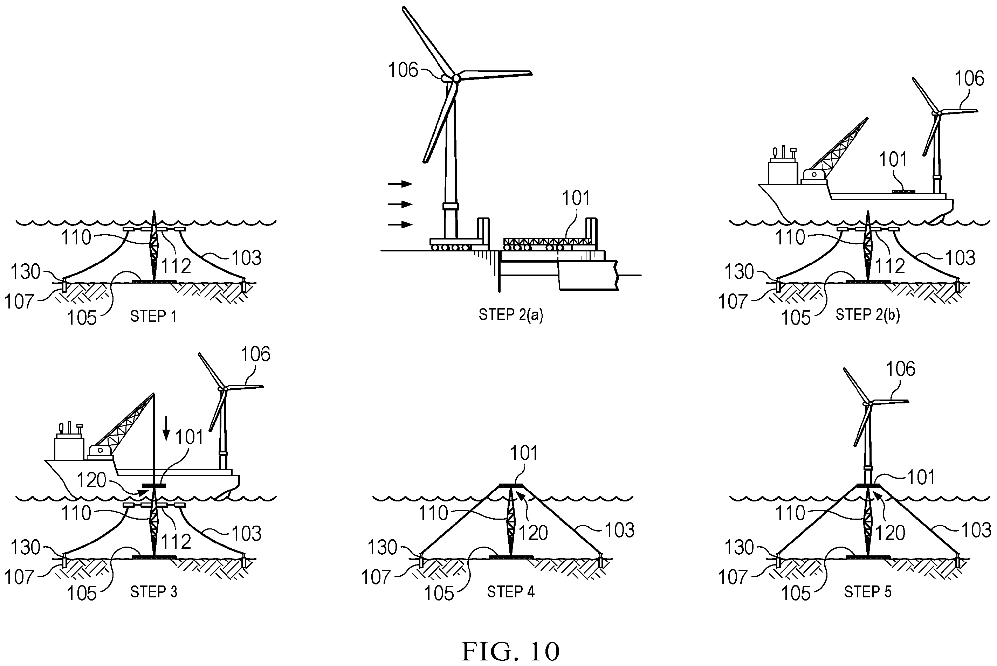

FIG. 10 depicts a method for installing an offshore platform, in accordance with embodiments of the present disclosure. As shown in step 1, the installation site already includes the foundation 105, lateral supports 103 attached to anchors 107, and column assembly 110 (space-frame or other arrangement). Buoyancy devices may be used to maintain the position of lateral supports 103 and column assembly 110 pending the completion of installation. At step 2(a), the top frame structure 101 and wind turbine 106 are loaded onto an installation vessel or barge. At step 2(b), the combination of top frame structure 101 and wind turbine 106 is floated out to the installation site. At step 3, top frame structure 101 is lifted off the installation vessel and lowered onto column assembly 110, where it is attached using fixed connection 120, as described above. Top frame structure 101 may be lifted and moved into a position by a crane or other installation aid located on the installation vessel. One of ordinary skill in the art will understand that alternate methods could be used to lower top frame structure onto column assembly 110. For example, top frame structure 101 could be disposed on a semi-submersible vessel, which could be lowered into the water, thereby also lowering top frame structure onto column assembly 110. At step 4, lateral supports 103 are attached to top platform 101, after which tension is applied to lateral supports 103. At step 5, wind turbine 106 is installed on top platform 101, at which point installation is complete.

In an alternative installation method, wind turbine 106 may be installed on top platform 101 prior to either component being loaded onto the installation vessel. In this embodiment, the combination of top platform 101 and wind turbine 106 may be loaded together onto the installation vessel, and lowered together onto column assembly 110. Accordingly, in this instance, step 5 of the method described above would be omitted as unnecessary.

In certain embodiments, a diver-less subsea connection is used to connect the column assembly 110 (or other supporting structure) to the foundation 105.

In comparison to the installation methods described in US Patent Application Nos. 18/183,442; 18/301,834; 18/489,448; and 18/930,410, the methods described above are simpler because they do not require steps of installing, or applying tension to, tendons extending between top frame structure 101 and foundation 105.

In certain embodiments, the materials for installations can be created from components manufactured close by to the installation, such as installations in the North Sea where manufacturing happens in the UK. In certain embodiments, for cases where there is limited local manufacturing capability, the installation can be created from modular components pre-fabricated at low-cost locations and transported to ports close by to the installation for assembly. With premanufactured components, the structure may be partially assembled on shore to save with installation time and effort because of the accessibility of the components nearby installation sites with minimal need for exotic components. Additionally, because many installation locations are near ports with standard port water depth, the assembly may be pre-fabricated near shore.

Further, these installations can be installed with standard vessels in transition sites, and the tower can be installed quayside (or at the shore) eliminating the requirements for expensive heavy lift crane barges and vessels. Further, the portion of the installation on the seabed can be pre-installed prior to the installation of the turbine tower section itself, which minimizes the time required of sea vessels during installation of the turbine tower and increases the ability to perform multiple turbine tower installations at once.

Thus, the current design is cost competitive with a fixed tower and floating solution at a time when the offshore wind industry is looking to provide more installations in these transition site depths. This design also provides a reduced environmental impact relative to the other known solutions. In particular, in certain embodiments, the offshore platform described in relation to FIGS. 1-10 above minimizes the piling requirements necessary to anchor the offshore platform. This reduces the amount of noise pollution and makes it favorable for shallow water applications. In addition, the illustrated embodiment exposes minimal structure to wave and ocean current loads, in comparison to traditional floating platforms. Advantageously, this reduces the lateral support requirements, minimizing environmental disturbance during wave and current loading conditions. Additionally, the design provides a smaller footprint than a traditional floating platform because of the reduced lateral support requirements, thus providing more space between the offshore installations for vessel movement.

In some versions, the offshore installation disclosed herein may be provided as a kit of parts. In such a kit, each part described herein may be provided as a part of the kit. The offshore installation may, accordingly, be installed using the kit and may, therefore, include the parts of the kit.

It is understood that variations may be made in the foregoing without departing from the scope of the present disclosure. In several exemplary embodiments, the elements and teachings of the various illustrative exemplary embodiments may be combined in whole or in part in some or all of the illustrative exemplary embodiments. In addition, one or more of the elements and teachings of the various illustrative exemplary embodiments may be omitted, at least in part, and/or combined, at least in part, with one or more of the other elements and teachings of the various illustrative embodiments.

Any spatial references, such as, for example, "upper," "lower," "above," "below," "between," "bottom," "vertical," "horizontal," "angular," "upwards," "downwards," "side-to-side," "left-to-right," "right-to-left," "top-to-bottom," "bottom-to-top," "top," "bottom," "bottom-up," "top-down," etc., are for the purpose of illustration only and do not limit the specific orientation or location of the structure described above.

In several exemplary embodiments, while different steps, processes, and procedures are described as appearing as distinct acts, one or more of the steps, one or more of the processes, and/or one or more of the procedures may also be performed in different orders, simultaneously and/or sequentially. In several exemplary embodiments, the steps, processes, and/or procedures may be merged into one or more steps, processes and/or procedures.

In several exemplary embodiments, one or more of the operational steps in each embodiment may be omitted. Moreover, in some instances, some features of the present disclosure may be employed without a corresponding use of the other features. Moreover, one or more of the above-described embodiments and/or variations may be combined in whole or in part with any one or more of the other above-described embodiments and/or variations.

Although several exemplary embodiments have been described in detail above, the embodiments described are exemplary only and are not limiting, and those skilled in the art will readily appreciate that many other modifications, changes and/or substitutions are possible in the exemplary embodiments without materially departing from the novel teachings and advantages of the present disclosure. Accordingly, all such modifications, changes, and/or substitutions are intended to be included within the scope of this disclosure as defined in the following claims. Moreover, it is the express intention of the applicant not to invoke 35 U.S.C. § 112, paragraph 6 for any limitations of any of the claims herein, except for those in which the claim expressly uses the word "means" together with an associated function.

When used in this specification and claims, the terms "comprises" and "comprising" and variations thereof mean that the specified features, steps or integers are included. The terms are not to be interpreted to exclude the presence of other features, steps or components.

The invention may also broadly consist in the parts, elements, steps, examples and/or features referred to or indicated in the specification individually or collectively in any and all combinations of two or more said parts, elements, steps, examples and/or features. In particular, one or more features in any of the embodiments described herein may be combined with one or more features from any other embodiment(s) described herein.

Protection may be sought for any features disclosed in any one or more published documents referenced herein in combination with the present disclosure.

Although certain example embodiments of the invention have been described, the scope of the appended claims is not intended to be limited solely to these embodiments. The claims are to be construed literally, purposively, and/or to encompass equivalents.

Representative features are set out in the following clauses, which stand alone or may be combined, in any combination, with one or more features disclosed in the text and/or drawings of the specification.
1. An offshore installation comprising:
   a top platform having a weight and comprising a top surface and a bottom surface;
   a foundation configured to be disposed on a seafloor;
   a vertical column assembly comprising:
      a first end fixedly connected to the bottom surface of the top platform;
      a second end connected to the foundation;
      a first vertical support member extending from the first end to the second end, such that the vertical column assembly supports the weight of the top platform; and
      a plurality of lateral supports configured to extend from the top platform to the seafloor.
2. The offshore installation of clause 1, wherein the vertical column assembly further comprises a second vertical support member extending from the first end of the vertical column assembly to the second end of the vertical column assembly.
3. The offshore installation of clause 1 or 2, wherein the top platform further comprises:
   a center point;
   a first leg extending outward from the center point;
   a second leg extending outward from the center point;
   a third leg extending outward from the center point; and
   wherein the first leg, second leg, and third leg are all on a first plane.
4. The offshore installation of any preceding clause, wherein the vertical column assembly comprises a column truss.
5. The offshore installation of any preceding clause, further comprising a wind turbine configured to be mounted on the top surface of the top platform.
6. The offshore installation of any preceding clause, wherein the plurality of lateral supports comprise tendons.
7. The offshore installation of any preceding clause, wherein the second end of the vertical column assembly is fixedly connected to the foundation.
8. The offshore installation of any of clauses 1-6, further comprising a pivot joint connecting the second end of the vertical column assembly to the foundation.
9. The offshore installation of any preceding clause, further comprising:
   a plurality of anchors disposed in the seafloor; and
   a plurality of connector bodies, each connector body configured to connect one of the plurality of lateral supports to one of the plurality of anchors.
10. The offshore installation of clause 9, wherein each of the plurality of connector bodies is configured to allow relative axial movement of the lateral support to which it is connected.
11. A method for installing an offshore installation on a seafloor, comprising:
   installing on the seafloor at an installation site a foundation, a vertical column assembly connected to the foundation, a plurality of lateral supports, and a plurality of anchors disposed in the seafloor and connected to the plurality of lateral supports;
   transporting to the installation site offshore equipment and a top frame structure having a weight and comprising a top surface and a bottom surface;
   positioning the top frame structure above the vertical column assembly, such that the vertical column assembly supports the weight of the top frame structure;
   fixedly connecting a top end of the vertical column assembly to the bottom surface of the top frame structure;
   attaching the plurality of lateral supports to the top frame structure;
   applying tension to the lateral supports; and
   installing the offshore equipment on the top surface of the top frame structure.
12. The method of clause 11, further comprising lifting the top frame structure clear of an installation vessel before it is positioned above the vertical column assembly.
13. The method of clause 11 or 12, wherein the vertical column assembly comprises a column truss.
14. The method of any of clauses 11-13, wherein the plurality of lateral supports comprise tendons.
15. The method of any of clauses 11-14, wherein the offshore equipment comprises a wind turbine.
16. The method of any of clauses 11-15, further comprising the step of installing a plurality of connector bodies, each connector body configured to connect one of the plurality of lateral supports to one of the plurality of anchors.
17. The method of clause 16, wherein each of the plurality of connector bodies is configured to allow relative axial movement of the lateral support to which it is connected.
18. The method of any of clauses 11-17, wherein the step of installing the offshore equipment on the top surface of the top frame structure is performed prior to the step of transporting to the installation site offshore equipment and a top frame structure having a weight and comprising a top surface and a bottom surface.
19. The method of any of clauses 11-18, wherein the step of installing the offshore equipment on the top surface of the top frame structure is performed after the step of applying tension to the lateral supports.

## Claims

1. An offshore installation kit comprising:
a top platform having a weight and comprising a top surface and a bottom surface;
a foundation configured to be disposed on a seafloor;
a vertical column assembly comprising:
a first end configured to be fixedly connected to the bottom surface of the top platform;
a second end configured to be connected to the foundation;
a first vertical support member configured to extend from the first end to the second end, such that the vertical column assembly supports the weight of the top platform; and
a plurality of lateral supports configured to extend from the top platform to the seafloor.

2. An offshore installation comprising:
a top platform having a weight and comprising a top surface and a bottom surface;
a foundation configured to be disposed on a seafloor;
a vertical column assembly comprising:
a first end fixedly connected to the bottom surface of the top platform;
a second end connected to the foundation;
a first vertical support member extending from the first end to the second end, such that the vertical column assembly supports the weight of the top platform;
and
a plurality of lateral supports configured to extend from the top platform to the seafloor.

3. The offshore installation or kit of claim 1 or 2, wherein the vertical column assembly further comprises a second vertical support member configured to extend from the first end of the vertical column assembly to the second end of the vertical column assembly.

4. The offshore installation or kit of any preceding claim, wherein the top platform further comprises:
a center point;
a first leg extending outward from the center point;
a second leg extending outward from the center point;
a third leg extending outward from the center point; and
wherein the first leg, second leg, and third leg are all on a first plane.

5. The offshore installation or kit of any preceding claim, wherein:
the vertical column assembly comprises a column truss;
the offshore installation or kit further comprises a wind turbine configured to be mounted on the top surface of the top platform; and/or
the plurality of lateral supports comprise tendons.

6. The offshore installation or kit of claim any preceding, wherein the second end of the vertical column assembly is fixedly connectable to the foundation.

7. The offshore installation or kit of any of claims 1-5, further comprising a pivot joint configured to connect the second end of the vertical column assembly to the foundation.

8. The offshore installation or kit of any preceding claim, further comprising:
a plurality of anchors disposable in the seafloor; and
a plurality of connector bodies, each connector body configured to connect one of the plurality of lateral supports to one of the plurality of anchors.

9. The offshore installation or kit of claim 8, wherein each of the plurality of connector bodies is configured to allow relative axial movement of the lateral support to which it is connected.

10. A method for installing an offshore installation on a seafloor, comprising:
installing on the seafloor at an installation site a foundation, a vertical column assembly connected to the foundation, a plurality of lateral supports;
transporting to the installation site offshore equipment and a top frame structure having a weight and comprising a top surface and a bottom surface;
positioning the top frame structure above the vertical column assembly, such that the vertical column assembly supports the weight of the top frame structure;
fixedly connecting a top end of the vertical column assembly to the bottom surface of the top frame structure;
attaching the plurality of lateral supports to the top frame structure, wherein the plurality of lateral supports extend to the seafloor;
applying tension to the lateral supports; and
installing the offshore equipment on the top surface of the top frame structure.

11. The method of claim 10, further comprising lifting the top frame structure clear of an installation vessel before it is positioned above the vertical column assembly.

12. The method of claim 10 or 11, wherein:
the vertical column assembly comprises a column truss; and/or the plurality of lateral supports comprise tendons; and/or
the offshore equipment comprises a wind turbine.

13. The method of any of claims 10-12, further comprising the step of installing a plurality of connector bodies, each connector body configured to connect one of the plurality of lateral supports to one of a plurality of anchors disposed on the seafloor.

14. The method of claim 13, wherein each of the plurality of connector bodies is configured to allow relative axial movement of the lateral support to which it is connected.

15. The method of any of claims 10-14, wherein:
the step of installing the offshore equipment on the top surface of the top frame structure is performed prior to the step of transporting to the installation site offshore equipment and a top frame structure having a weight and comprising a top surface and a bottom surface; and/or
the step of installing the offshore equipment on the top surface of the top frame structure is performed after the step of applying tension to the lateral supports.

## Amended claims

### Amended claims in accordance with Rule 137(2) EPC.

1. An offshore installation kit comprising:
a top frame structure (101) having a weight;
a foundation (105) configured to be disposed on a seafloor;
a vertical column assembly (110, 210, 310, 810) comprising:
a first end configured to be fixedly connected to the top frame structure;
a second end configured to be connected to the foundation;
a first vertical support member configured to extend from the first end to the second end, such that the vertical column assembly supports the weight of the top frame structure; and
a plurality of lateral supports (103, 803) configured to extend from the top frame structure to the seafloor,
wherein the top frame structure and foundation are configured such that no tendons are used to connect the top frame structure to the foundation.

2. An offshore installation comprising:
a top frame structure (101) having a weight;
a foundation (105) configured to be disposed on a seafloor;
a vertical column assembly (110, 210, 310, 810) comprising:
a first end fixedly connected to the top frame structure;
a second end connected to the foundation;
a first vertical support member extending from the first end to the second end, such that the vertical column assembly supports the weight of the top frame structure; and
a plurality of lateral supports (103, 803) configured to extend from the top frame structure to the seafloor,
wherein the offshore installation does not include tendons connecting the top frame structure to the foundation.

3. The offshore installation or kit of claim 1 or 2, wherein the vertical column assembly further comprises a second vertical support member configured to extend from the first end of the vertical column assembly to the second end of the vertical column assembly.

4. The offshore installation or kit of any preceding claim, wherein the top frame structure further comprises:
a center point (403);
a first leg (402) extending outward from the center point;
a second leg (402) extending outward from the center point;
a third leg (402) extending outward from the center point; and
wherein the first leg, second leg, and third leg are all on a first plane.

5. The offshore installation or kit of any preceding claim, wherein:
the vertical column assembly comprises a column truss;
the offshore installation or kit further comprises a wind turbine (106) configured to be mounted on the top frame structure; and/or
the plurality of lateral supports comprise tendons.

6. The offshore installation or kit of any preceding claim, wherein the second end of the vertical column assembly is fixedly connectable to the foundation.

7. The offshore installation or kit of any of claims 1-5, further comprising a pivot joint configured to connect the second end of the vertical column assembly to the foundation.

8. The offshore installation or kit of any preceding claim, further comprising:
a plurality of anchors (107) disposable in the seafloor; and
a plurality of connector bodies (130), each connector body configured to connect one of the plurality of lateral supports to one of the plurality of anchors.

9. The offshore installation or kit of claim 8, wherein each of the plurality of connector bodies is configured to allow relative axial movement of the lateral support to which it is connected.

10. A method for installing an offshore installation on a seafloor, comprising:
installing on the seafloor at an installation site a foundation (105), a vertical column assembly (110, 210, 310, 810) connected to the foundation, a plurality of lateral supports (103, 803);
transporting to the installation site offshore equipment and a top frame structure (101) having a weight;
positioning the top frame structure above the vertical column assembly, such that the vertical column assembly supports the weight of the top frame structure;
fixedly connecting a top end of the vertical column assembly to the top frame structure;
attaching the plurality of lateral supports to the top frame structure, wherein the plurality of lateral supports extend to the seafloor;
applying tension to the lateral supports; and
installing the offshore equipment on the top frame structure,
wherein the offshore installation does not include tendons connecting the top frame structure to the foundation.

11. The method of claim 10, further comprising lifting the top frame structure clear of an installation vessel before it is positioned above the vertical column assembly.

12. The method of claim 10 or 11, wherein:
the vertical column assembly comprises a column truss; and/or the plurality of lateral supports comprise tendons; and/or
the offshore equipment comprises a wind turbine (106).

13. The method of any of claims 10-12, further comprising the step of installing a plurality of connector bodies (130), each connector body configured to connect one of the plurality of lateral supports to one of a plurality of anchors (107) disposed on the seafloor.

14. The method of claim 13, wherein each of the plurality of connector bodies is configured to allow relative axial movement of the lateral support to which it is connected.

15. The method of any of claims 10-14, wherein:
the step of installing the offshore equipment on the top frame structure is performed prior to the step of transporting to the installation site offshore equipment and a top frame structure having a weight; or
the step of installing the offshore equipment on the top frame structure is performed after the step of applying tension to the lateral supports.
